# EUROPEAN PATENT SPECIFICATION

(11) **EP 2 399 383 B1**
(45) Date of publication and mention of the grant of the patent: **17.09.2014**
(21) Application number: 10708027.7
(22) Date of filing: 23.02.2010
(51) Int. Cl.: H04N 21/2389, H04N 21/438, H04N 21/4623, H04N 21/472, H04N 21/488, H04N 21/4385, H04N 5/445

(54) **METHOD AND APPARATUS TO DETECT PREVIEW OF ENCRYPTED CONTENT**
VERFAHREN UND VORRICHTUNG ZUM DETEKTIEREN DER VORSCHAU VON VERSCHLÜSSELTEM INHALT
PROCÉDÉ ET APPAREIL PERMETTANT DE DÉTECTER UNE PRÉVISUALISATION D'UN CONTENU CRYPTÉ

(30) Priority: 23.02.2009 US 390808
(43) Date of publication of application: 28.12.2011
(73) Proprietor: Advanced Micro Devices, Inc., Sunnyvale, CA 94008 (US)
(72) Inventor: JAGMAG, Adil, Hollis, NH (US)
(74) Representative: Kenrick, Mark Lloyd
(86) International application number: PCT/US2010/025024
(87) International publication number: WO 2010/096799

(56) References cited:
- WO-A1-2005/046167
- WO-A1-2007/073370
- US-A1- 2002 178 446
- US-A1- 2003 124 973
- US-A1- 2003 154 486
- US-A1- 2007 165 855
- US-A1- 2008 123 847

## Description

### BACKGROUND OF THE INVENTION

The disclosure relates generally to television systems.

Cable and content providers frequently promote specific pay channels by airing them unencrypted for a fixed period of time. However, it is difficult to keep track of the free previews and hence many customers miss the free previews particularly if they do not subscribe to a cable box, for example.

Currently, customers know of unencrypted previews via written advertising brochures they typically receive in the mail from the cable operator. Once the time period lapses for viewing the free preview, the cable providers re-encrypt the channels unless a customer pays for the viewing of the channel. Digital televisions and cable boxes typically detect and disable channels from a broadcaster that are encrypted and a user is typically simply shown a screen that states that the programming that they are attempting to view on a particular channel or subchannel is unavailable and that a fee must be paid to view the programming.

It is known to use television receivers to detect scrambled incoming transport streams so that the television does not display blank screens. Instead, a blue screen or a still image screen with text may be displayed. Also, channel scanning is known which is typically performed, for example, when using a single tuner at a point in time when the user believes that the television is off. This is typically referred to as a background channel scan which searches for electronic programming guide information, for example. If multiple tuners are present in a digital television, then background scans can be performed using the tuner that is not being tuned to a current channel that is being watched. However, such prior art systems do not provide a solution to eliminating the need for a user having to manually keep track of when preview content will expire or when unencrypted information is now available for viewing. A need exists to improve the revenue generating stream for broadcast content that employ preview content such as temporarily unencrypted and encrypted program information.

### BRIEF DESCRIPTION OF THE DRAWINGS

The invention will be more readily understood in view of the following description when accompanied by the below figures and wherein like reference numerals represent like elements, wherein:
FIG. 1 is a block diagram illustrating one example of a video display apparatus in accordance with one example set forth in the disclosure;
FIG. 2 is a flowchart illustrating one example of a method for processing video information in accordance with one example set forth in the disclosure;
FIG. 3 is a flowchart illustrating in more detail one example of a method for processing video information in accordance with one example set forth in the disclosure;
FIG. 4 is one example of a display screen containing information based on a detection of a presence of a change in encryption status of video information in accordance with one example set forth in the disclosure;
FIG. 5 is one example of a display screen containing information based on a detection of a presence of a change in encryption status of video information in accordance with one example set forth in the disclosure;
FIG. 6 is one example of a display screen containing presented information in the form of channel screen menu in accordance with one example set forth in the disclosure; and
FIG. 7 is an example of a display screen containing information that notifies a viewer of preview viewing status in accordance with one example set forth in the disclosure.

### DETAILED DESCRIPTION OF THE PREFERRED EMBODIMENTS

Briefly, a method and apparatus detects a presence of a change in encryption status of video information, such as a program preview, in a video stream. The method and apparatus issues notification information such as through a visual user interface, audibly or in any other suitable manner, that new content, such as a pay per view video information, is either available or unavailable based on the detection of a change in encryption status of the video information. Among other advantages, an interactive and automated technique is provided to inform a user while, for example, the user is watching a display device, that a preview of content is now available or that a previously available preview has now changed and is now encrypted and therefore a user must order the previewed content before an expiration period occurs. In this fashion, a user is automatically notified that a free preview is available, while watching television and a broadcaster may increase revenues since preview information is more readily detected and presented to potential customers.

In one example, the detection of a presence of a change in encryption status of video information is done by evaluating broadcast system information that has been embedded in a broadcast stream. The broadcast system information may be, for example, program map table information, channel map table information or any metadata embedded in an incoming video stream that indicates that a video preview is encrypted or unencrypted. In this way, a video receiver system can detect the embedded information to determine whether incoming video previews are encrypted or unencrypted without having to analyze the actual packets that make up the video preview. In another example, the detection of a presence of a change in encryption status information may include performing a channel scan on a transport stream and determining which subchannels of a channel are encrypted. This may be done, for example, when tuned to a corresponding channel that has encrypted subchannels. A check is then performed for a change in encryption status of the encrypted subchannels. In another example, instead of performing a channel scan, an audio and video decoder may be employed to determine if video information is unscrambled as part of the decoding process. In another example, instead of a transport stream based detection method, a Packetized Elementary Stream (PES) detection process may be used as part of the setup of audio and video decoding process to determine whether a change in encryption has occurred for content. However, it will be recognized that any other suitable techniques of detecting a change in encryption status may also be employed.

In another example, a channel scan may be performed and the detection of the presence of a change in encryption status may occur by determining from program map table information, whether a program is encrypted or decrypted. A visual display of information may also be produced that contains a combination of a plurality of channel identifiers such as channel name or channel number along with corresponding encryption status data for each of the plurality of channel identifiers along with purchase information to allow a viewer to purchase preview content. As such, a user interface may be provided with data representing ordering information corresponding to video identified by the preview of content in response to detection of change from an encrypted to a decrypted status.

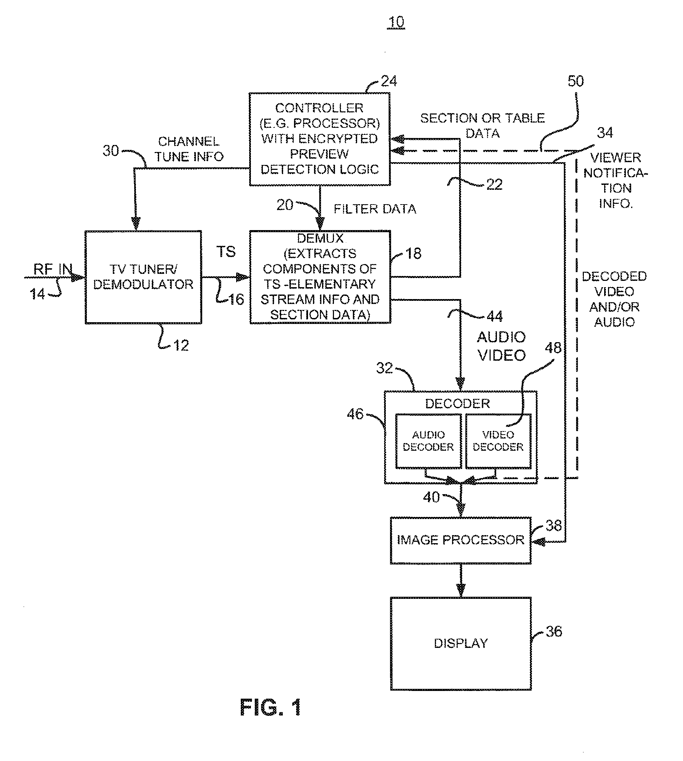

FIG. 1 illustrates one example of a video display apparatus 10 that includes a video receiver 12 that receives an incoming video stream 14. The video display apparatus 10 may be a digital television, a combination of a set top box or cord and television; a laptop computer handheld device or any suitable video viewing apparatus. In this example, the video receiver 12 may be a combination of a television tuner and demodulator, as known in the art that may be used to tune to different channels and demodulate the incoming video information and output a transport stream 16. A demultiplexer 18, as known in the art, extracts components of the transport stream pursuant to ATSC standards, such as elementary stream information and section data based on, for example, program identification filter information 20 or any other suitable control information as known in the art. The demultiplexer 18 outputs section data or table data 22 which may be used by a controller 24 that employs encrypted preview detection logic. The controller 24 may be, for example, one or more suitable processors and/or ASIC chips utilized in digital television processing, or any other suitable structure as desired.

The incoming video information 14 may be, for example, an ATSC, DVB, ISDB compliant stream or any other suitable broadcast information. The controller 24 is operative to carry out conventional DTV tuning operations such as facilitating channel scans by outputting channel tune information 30 to control the video receiver 12 to tune to a particular channel or subchannel as known in the art. The controller 24, demultiplexer 18 and decoder 32 may be integrated, for example, on one or more integrated circuit dies and may be of the type, for example, of the Xilleon type chips produced by ATI Technologies, Inc., Thornhill, Ontario, Canada, or any other suitable structure. The controller 24 is a digital processor that executes instructions that are stored in memory (e.g., ROM, RAM, etc.) located on chip or off chip as desired. The controller 24 unlike conventional digital television circuits includes additional logic (e.g., a processor executing new software stored in memory) that detects the presence of a change in encryption status of video information in the video stream 14 and produces viewer notification information 34 that is displayed on a display 36. The viewer notification information 34 indicates that new content is available or unavailable. The viewer notification information 34 is produced based on the detection of the change in encryption status of the video information. The display 36 such as an LCD display, plasma or any other suitable display, displays the viewer notification information 34 for a user. This may be done by using an image processor 38, as known in the art that presents information for display. The image processor 38 may receive the decoded video and audio information 40 from the decoder as known in the art and display it on the display 36 in any suitable format including in any desired location on the screen, in any desired size and in any desired resolution.

The demultiplexer 18 also outputs decoded audio and video data 44 that may be decoded by conventional decoder 32. The decoder 32 may include an audio decoder 46 and a video decoder 48 also as known in the art.

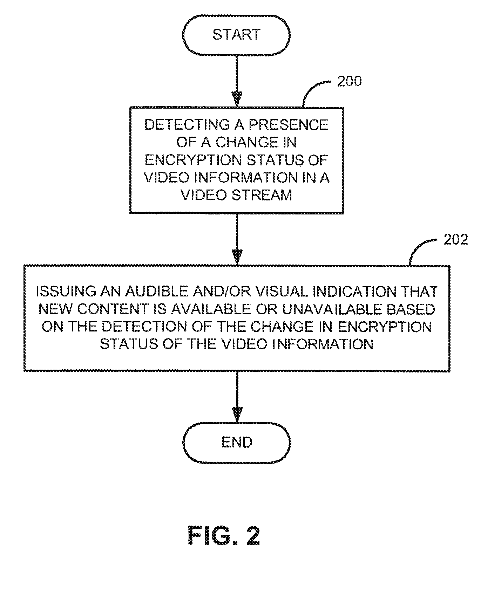

Referring also to FIG. 2, a method is shown that may be carried out by one or more devices such as the video display apparatus of FIG. 1. The method includes detecting a presence of a change in encryption status of video information in a video stream as shown in block 200. For example, the controller 24 serves as a video processing circuit that processes broadcast system information such as a virtual channel table information, program map table information or other section data or table data 22 that has embedded information therein in the video stream 14 that indicates whether a video preview is encrypted or unencrypted. If the controller 24 determines that a change in encryption status of video information for a channel or subchannel has changed from an encrypted state to an unencrypted state (so that the viewer can view preview content), or if a change from an unencrypted to encrypted state occurs (indicating that a viewing period for a video preview has ended so that the user can no longer view the preview information), viewer notification information 34 is used to notify the viewer audibly or visually (this includes either or both). The viewer may purchase the content if the viewer wishes to purchase rights to view the content if the viewer wishes to view the content in an unencrypted form. As shown in block 202, the method includes notifying a viewer that preview content is available such as in the case where the change in encryption status is from an encrypted to an unencrypted state, or that the content is no longer available, such as the case where the content goes from an unencrypted state to an encrypted state. This notification of the viewer is based on a detection of the change in encryption status of the video information. For example, the controller 24 may output viewer notification information 34 to the image processor 38 to display text or to output audio information notifying the user that the user must purchase content to continue viewing an unencrypted preview or notifying the user that there is encrypted content that was previously unencrypted and that preview rights have ceased.

By way of example, detecting the presence of a change in encryption status information wherein broadcast system information is used, the broadcaster or any other entity may embed data in the video stream that indicates whether a video preview is encrypted or unencrypted. As described above, the broadcast system information may be for example, metadata in broadcast tables that indicates whether or not intended preview content is encrypted or unencrypted. In one example the controller 24 detects this data that is inserted in tables and looks for a change in status of the data as it processes incoming video streams for channels or subchannels.

In an alternative operation, the controller 24 may maintain in its local memory (e.g. RAM) or other suitable memory, a cache of current channels and compare the cached current channel with the broadcast system information embedded in the video stream to determine if an incoming video stream contains different preview content from the cached channel.

In an alternative embodiment where no broadcast system information has been embedded in the video stream to indicate whether the video preview is encrypted or unencrypted, a detection of a presence of a change in encryption status of information (e.g., intended as preview content), includes performing a channel scan on the transport stream 16 and determining which subchannels of a channel are encrypted, when tuned to a corresponding channel that has encrypted subchannels. This may be performed for example by the controller 24. The controller 24 may perform a check for a change in encryption status in the encrypted subchannels. If desired, the channel scan may occur when the apparatus 10 is in a standby condition such as a standby mode and perform a background scan of only encrypted subchannels. If a change in encryption status is detected, the controller may then wait to inform a viewer until after subsequent "power on" of the apparatus 10 occurs.

Detecting the presence of a change in encryption status may also include for example the controller 24 determining whether header information of one or more packets of video information in the transport stream 16 indicates that the video information is encrypted. As noted above, this header information may be one example of broadcast system information that is embedded in the video stream. Detecting a presence of a change in encryption status with respect to header information may include using PES header information to determine if audio or video is encrypted. Bits in a header may be inserted into a PES header that are detected by the controller 24 to indicate whether or not the transport stream being processed for a given program has changed in its encryption status.

Another approach for detecting the presence of the change in encryption status may include during a channel scan, determining from program map table information, whether a program is encrypted or decrypted. Program map tables (PMT) are known structures in ATSC type streams. For example, new data may be included in the PMT to indicate whether a channel/subchannel is encrypted or unencrypted.

As another alternative approach, the controller 24 may not detect embedded information in the transport stream but may instead detect the presence of a change in encryption status by using decoded audio and/or video information that is output from decoder 32, for example shown by dashed line 50 (FIG. 1). This is a type of post decoding detection. In this example decoded video of a video frame for example may be compared to decoded subsequent frames to see whether or not video is present. If video changes from being present to non-present or non-present to present a change in encryption status is determined to have resulted.

As described above, several techniques are disclosed that can be used to detect a presence of a change in encryption status of video information such as content to be previewed by a viewer. In several of the techniques, metadata is embedded in the transport stream and then received by the receiver. For example program map table information such as conditional access descriptors in the PMT may be analyzed during, for example, an initial channel scan process to detect whether a change in encryption status has occurred. The controller 24 can evaluate the new PMT information to make the decision. In another example header in packets can identify whether a packet includes scrambled information. The controller 24 looks at the packets over time to determine whether information has been scrambled. In another example, the PES header may be used to indicate if audio or video is scrambled. These techniques for example do not require the use of the audio/video decoder pipeline. In other examples, the audio/video decoder is used so that audio and video pipelines are used to determine for example that no pictures or audio are present. If not present, the controller 24 determines that a channel is scrambled.

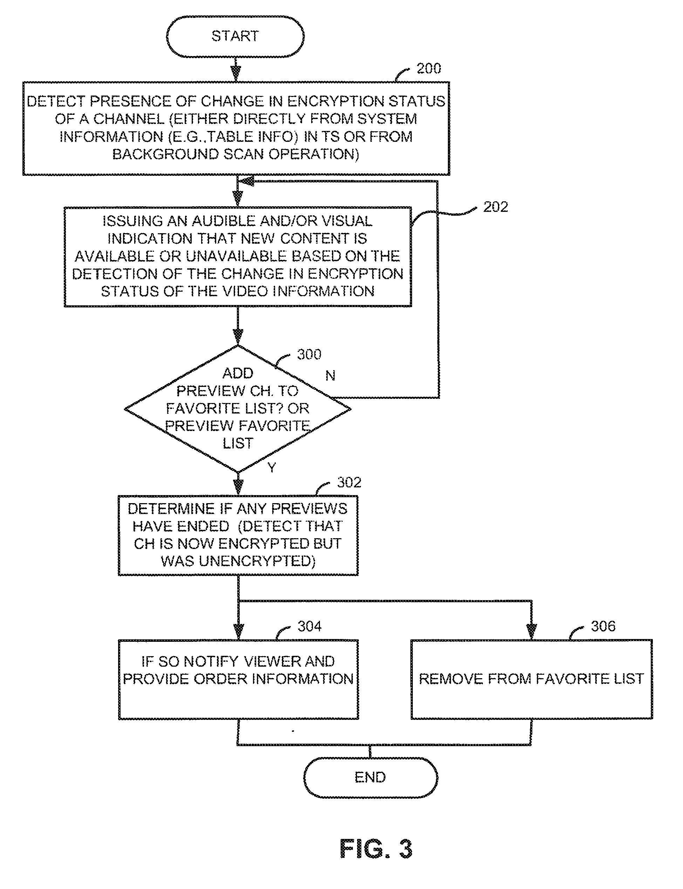

Referring to FIGs. 3-7, a description of the operation of the apparatus 10 will be described. As shown in block 202, after the detection of the presence of a change in encryption status has been done, notification of the viewer that new content is available (or unavailable if the change is from unencrypted to encrypted) is done. Controller 24 may generate the viewer notification information 34 to notify the image processor 38 to provide a user interface on screen for the user. The user interface may be for example a visual user interface that provides viewable onscreen information and if desired may allow the user to use a remote control or touch screen to enter response information.

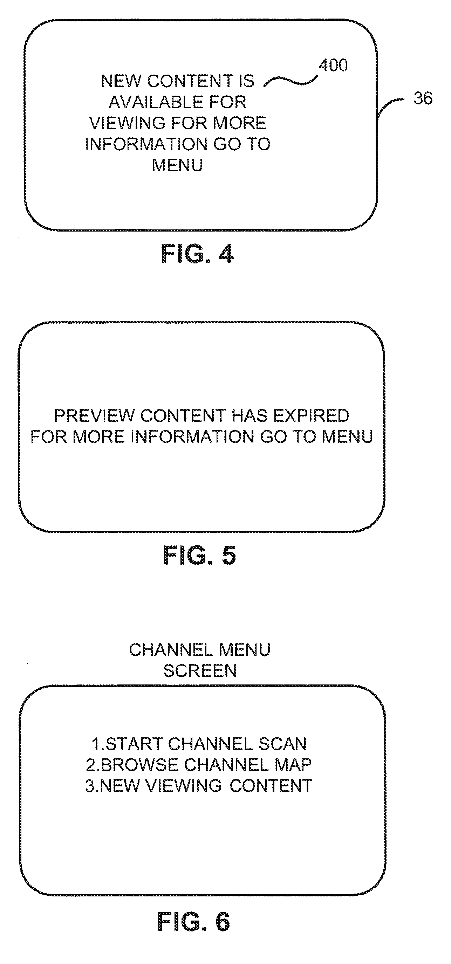

A visual user interface indicates that at least one preview of content has been detected in response to the detection from encrypted to decrypted status. This is shown for example in FIG. 4 where the display 36 has data produced thereon 400 that indicates that new content is available for viewing. If for example the detection is that an encrypted channel is now unencrypted, the controller 24 determines the length of time remaining that the (unencrypted) preview will be played on the channel. This may be done for example using embedded data in a table as provided by a broadcaster if desired. As shown in block 300, the method may include adding a preview channel to the favorite channel list or to a preview favorite list. The viewable preview content identifier (e.g., channel number) may be added to a user's favorite channel list so that the user can readily pull up the viewable content. A new preview favorite list may also be created for example by the controller 24 or image processor 38 or any other suitable structure that maintains and creates favorite lists so that the viewer can preview content information via a remote control device, internet access, or any other suitable mechanism. As shown in block 302, the method includes again detecting the presence of a change in encryption status by determining for example if any previews that were viewable (unencrypted) are now encrypted. This may include for example detecting that the channel is now encrypted but was unencrypted previously or that a timeout period or length of time available has been detected via embedded information in the transport stream for that particular channel. As shown in block 304 the method includes issuing a notification (e.g., to notify the viewer) and providing ordering information via the user interface, such as shown in FIG. 5 or a viewer notification is provided that indicates that the preview content has expired and that the user can go through the "menu" button on their remote and select menu to order the previewed content (FIG. 5). The method may include as shown in block 306 removing the preview channel from the favorite channel list or preview favorite list if the content is no longer viewable or if the user selects to remove the channel from the respective list.

FIG. 6 illustrates one example of a channel menu screen provided by the controller 24 via the image processor 38 that allows a user to select "start channel scan", "browse channel map" or "new viewing content". If the user selects new viewing content, the apparatus 10 presents an on-screen list of detected preview content that is currently being shown as unencrypted preview content that was previously encrypted.

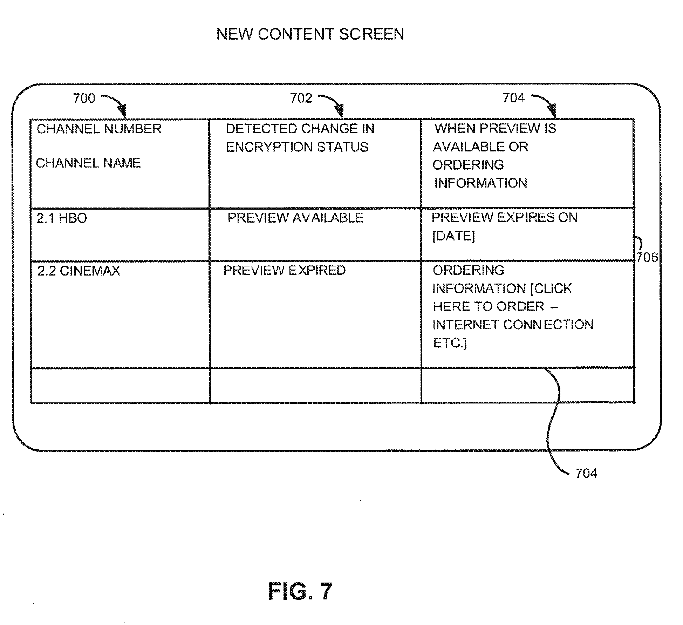

A "new content" screen as shown in FIG. 7 may also be generated if desired. The display 36 is provided with data representing a combination of a plurality of channel identifiers 700, corresponding encryption status 702 for each channel identifier and purchase information for preview content as shown in block 704. Such a preview content screen is generated by controller 24 and output for example by image processor 38 so that the user can select a particular channel that contains preview content and can also be provided with ordering information if desired. In addition to purchase order information 704, the data may include preview expiration information 706 indicating when the unencrypted preview content will end. This may be represented in hours or days so that the user can simply go to a preview screen that identifies the current unencrypted previews or preview content that has changed status and has now expired so that the user must purchase the content before it is again unencrypted by the broadcaster. As such the user interface contains and the apparatus displays preview expiration information 706 in combination with the channel identifier 700 and corresponding encryption status and purchase information for preview content.

Among other advantages, an automatic detection of when a viewable preview is available is provided and the user is automatically informed of detection of any preview or channel to which the user can view content as unencrypted content as well as notifying the user that previously unencrypted content that the user could preview, has now been encrypted so that the preview has expired. The user is then given the option to purchase the preview content. Accordingly, automatic detection and user feedback is provided indicating a change to a scrambled channel. Other advantages would be recognized by those of ordinary skill in the art.

Also, integrated circuit design systems (e.g. work stations) are known that create integrated circuits based on executable instructions stored on a computer readable memory such as but not limited to CDROM, RAM, other forms of ROM, hard drives, distributed memory etc. The instructions may be represented by any suitable language such as but not limited to hardware descriptor language or other suitable language. As such, the logic (e.g., circuits) described herein may also be produced as integrated circuits by such systems. For example an integrated circuit may be created for use in a display system using instructions stored on a computer readable medium that when executed cause the integrated circuit design system to create an integrated circuit that is operative to detect a presence of a change in encryption status of video information in a video stream and notify a viewer that new content is available or unavailable based on the detection of the change in encryption status of the video information. Integrated circuits having the logic that performs other of the operations described herein may also be suitably produced.

The above detailed description of the invention and the examples described therein have been presented for the purposes of illustration and description only and not by limitation. It is therefore contemplated that the present invention cover any and all modifications, variations or equivalents, provided that they fall within the scope of the appended claims.

## Claims

1. A method comprising:
detecting a presence of a change in encryption status of video information in a video stream; and
issuing a notification audibly or visually that new content is available or unavailable based on the detection of the change in encryption status of the video information during a channel scan;
wherein issuing a notification comprises providing a visual user interface comprising information indicating that at least one preview of content has been detected when a detection from an encrypted to a decrypted status has been detected;
**characterised by** comprising providing a visual display containing a combination of a plurality of channel identifiers, corresponding encryption status for each of the plurality of channel identifiers and purchase information for expired preview content; and
further comprising displaying preview expiration information in combination with the plurality of channel identifiers, corresponding encryption status for each of the plurality of channel identifiers and purchase information for expired preview content.

2. The method of claim 1 wherein detecting a presence of a change in encryption status of video information comprises using broadcast system information embedded in the video stream that indicates whether a video preview is encrypted or unencrypted.

3. The method of claim 2 wherein detecting a presence of a change in encryption status of video information comprises maintaining a cache of current preview content and comparing the cached current preview content with the broadcast system information embedded in the video stream and determining if an incoming video stream contains different preview content from the cached preview content.

4. The method of claim 1 wherein detecting a presence of a change in encryption status of video information comprises performing a channel scan on a transport stream and determining which subchannels of a channel are encrypted, when tuned to a corresponding channel that has encrypted subchannels, and performing a check for a change in encryption status of the encrypted subchannels.

5. The method of claim 4 further comprising, in response to a standby condition, performing a background scan of only the encrypted subchannels, if a change in encryption status is detected, waiting to inform a viewer until after subsequent power on of a viewing device.

6. The method of claim 1 wherein detecting the presence of the change in encryption status comprises determining whether header information of one or more packets of video information indicates that the video information is encrypted.

7. The method of claim 1 wherein detecting the presence of the change in encryption status comprises during a channel scan, determining from program map table information whether a program is encrypted or decrypted.

8. The method of claim 1 wherein detecting the presence of the change in encryption status comprises using audio/video decoder output to determine whether a channel is encrypted or unencrypted.

9. The method of claim 1 wherein detecting the presence of the change in encryption status comprises using a PES header to determine if audio or video is encrypted.

10. The method of claim 1 comprising receiving, through a user interface, data representing ordering information corresponding to video identified by the preview of content in response to detection from an encrypted to a decrypted status.

11. A video processing circuit comprising: logic operative to carry out the method of any one of claims 1 to 10.

## Patentansprüche

1. Verfahren, umfassend:
Erkennen eines Vorhandenseins einer Änderung im Verschlüsselungsstatus von Videoinformationen in einem Video-Stream; und
hörbares oder sichtbares Ausgeben einer Benachrichtigung, dass neue Inhalte verfügbar sind oder nicht verfügbar sind, auf Grundlage der Erkennung der Änderung im Verschlüsselungsstatus der Videoinformationen während einer Kanalabtastung;
wobei das Ausgeben einer Benachrichtigung Folgendes umfasst: Bereitstellen einer visuellen Benutzerschnittstelle, die Informationen umfasst, die angeben, dass wenigstens eine Vorschau von Inhalten erkannt wurde, wenn eine Erkennung von einem verschlüsselten zu einem unverschlüsselten Status erkannt wurde;
**gekennzeichnet dadurch, dass** es Folgendes umfasst: Bereitstellen einer visuellen Anzeige, die eine Kombination einer Mehrzahl von Kanalidentifikatoren, eines entsprechenden Verschlüsselungsstatus für jeden der Mehrzahl von Kanalidentifikatoren und von Kaufinformationen für abgelaufene Vorschauinhalte enthält; und
ferner umfassend Anzeigen von Vorschauablaufinformationen in Kombination mit der Mehrzahl von Kanalidentifikatoren, dem entsprechenden Verschlüsselungsstatus für jeden der Mehrzahl von Kanalidentifikatoren und Kaufinformationen für abgelaufene Vorschauinhalte.

2. Verfahren nach Anspruch 1, wobei das Erkennen eines Vorhandenseins einer Änderung im Verschlüsselungsstatus von Videoinformationen Folgendes umfasst: Verwenden von Übertragungssysteminformationen, die im Video-Stream eingebettet sind und angeben, ob eine Video-Vorschau verschlüsselt oder unverschlüsselt ist.

3. Verfahren nach Anspruch 2, wobei das Erkennen eines Vorhandenseins einer Änderung im Verschlüsselungsstatus von Videoinformationen Folgendes umfasst: Verwalten eines Cache von aktuellen Vorschauinhalten und Vergleichen der im Cache gespeicherten aktuellen Vorschauinhalte mit den Übertragungssysteminformationen, die im Video-Stream eingebettet sind, und Bestimmen, ob ein eingehender Video-Stream andere Vorschauinhalte als die im Cache gespeicherten aktuellen Vorschauinhalte enthält.

4. Verfahren nach Anspruch 1, wobei das Erkennen eines Vorhandenseins einer Änderung im Verschlüsselungsstatus von Videoinformationen Folgendes umfasst: Durchführen einer Kanalabtastung an einem Transport-Stream und Bestimmen, welche Unterkanäle eines Kanals verschlüsselt sind, wenn auf einen entsprechenden Kanal geschaltet wird, der verschlüsselte Unterkanäle aufweist, und Durchführen einer Prüfung auf eine Änderung im Verschlüsselungsstatus der verschlüsselten Unterkanäle.

5. Verfahren nach Anspruch 4, ferner umfassend, in Reaktion auf einen Bereitschaftszustand, Durchführen einer Hintergrundabtastung nur der verschlüsselten Unterkanäle, wenn eine Änderung im Verschlüsselungsstatus erkannt wird, Warten, um einen Zuschauer nach dem anschließenden Einschalten eines Sehgeräts zu informieren.

6. Verfahren nach Anspruch 1, wobei das Erkennen des Vorhandenseins der Änderung im Verschlüsselungsstatus Folgendes umfasst: Bestimmen, ob Header-Informationen von einem oder mehreren Paketen von Videoinformationen angibt, dass die Videoinformationen verschlüsselt sind.

7. Verfahren nach Anspruch 1, wobei das Erkennen des Vorhandenseins der Änderung im Verschlüsselungsstatus Folgendes umfasst: während einer Kanalabtastung, Bestimmen anhand von Programmzuordnungstabelleninformationen, ob ein Programm verschlüsselt oder unverschlüsselt ist.

8. Verfahren nach Anspruch 1, wobei das Erkennen des Vorhandenseins der Änderung im Verschlüsselungsstatus Folgendes umfasst: Verwenden eines Audio/Video-Decoder-Ausgangs, um zu bestimmen, ob ein Kanal verschlüsselt oder unverschlüsselt ist.

9. Verfahren nach Anspruch 1, wobei das Erkennen des Vorhandenseins der Änderung im Verschlüsselungsstatus Folgendes umfasst: Verwenden eines PES-Headers, um zu bestimmen, ob Audio oder Video verschlüsselt ist.

10. Verfahren nach Anspruch 1, umfassend: Empfangen, durch eine Benutzerschnittstelle, von Daten, die Bestellinformationen darstellen, die Video entsprechen, das durch die Vorschau von Inhalten identifiziert wurde, in Reaktion auf die Erkennung von einem verschlüsselten zu einem unverschlüsselten Status.

11. Einen Videobearbeitungsschaltkreis, umfassend: Betriebsfähige Logik zur Ausführung jeglicher der in Ansprüchen 1 bis 10 beschriebenen Verfahren.

## Revendications

1. Procédé comprenant :
la détection de la présence d'une modification dans le statut de cryptage d'informations vidéo dans un flux vidéo ; et
l'émission d'une notification de manière audible ou visuelle comme quoi le nouveau contenu est disponible ou non disponible lors de la détection de la modification du statut de cryptage des informations vidéo pendant le balayage d'un canal ;
l'émission d'une notification comprenant l'apport d'une interface visuelle d'utilisateur comprenant des informations indiquant qu'au moins un aperçu du contenu a été détecté lorsqu'une détection provenant d'un statut crypté vers un statut décrypté a été détectée ;
**caractérisé par** le fait de comprendre l'apport d'un affichage visuel contenant une combinaison d'une pluralité d'identifiants de canaux, correspondant au statut de cryptage pour chacun des identifiants de canaux de la pluralité et des informations d'achat pour le contenu expiré de prévisualisation ; et
comprenant en outre l'affichage d'une combinaison d'informations d'expiration de prévisualisation avec la pluralité d'identifiants de canaux, correspondant au statut de cryptage pour chacun des identifiants de canaux de la pluralité et des informations d'achat pour le contenu expiré de prévisualisation.

2. Procédé selon la revendication 1, dans lequel la détection d'une présence d'une modification dans le statut de cryptage des informations vidéo comprend l'emploi d'informations de système d'émission intégrées dans le flux vidéo, qui indique si une prévisualisation de vidéo est cryptée ou non cryptée.

3. Procédé selon la revendication 2, dans lequel la détection d'une présence d'une modification dans le statut de cryptage des informations vidéo comprend le maintien d'un cache de contenu de prévisualisation de courant et la comparaison du contenu de prévisualisation de courant aux informations de système d'émission intégrées dans le flux vidéo, et la détermination si un flux vidéo entrant contient un contenu différent de prévisualisation par rapport au contenu caché de prévisualisation.

4. Procédé selon la revendication 1, dans lequel la détection d'une présence d'une modification dans le statut de cryptage des informations vidéo comprend la réalisation d'un balayage de canaux sur un flux de transport et la détermination des sous-canaux d'un canal qui sont cryptés, lorsqu'on passe à un canal correspondant qui a crypté des sous-canaux, et la réalisation d'un contrôle du changement de statut de cryptage des sous-canaux cryptés.

5. Procédé selon la revendication 4 comprenant en outre, en réponse à un état de veille, la réalisation d'un balayage d'arrière-plan des seuls sous-canaux cryptés, si une modification du statut de cryptage est détectée, l'attente pour informer un téléspectateur jusqu'à après la mise en marche successive d'un appareil de visualisation.

6. Procédé selon la revendication 1, dans lequel la détection de la présence de la modification dans le statut de cryptage comprend la détermination si les informations d'en-tête d'au moins un paquet d'informations vidéo indiquent si les informations vidéo sont cryptées.

7. Procédé selon la revendication 1, dans lequel la détection de la présence de la modification dans le statut de cryptage comprend, lors du balayage d'un canal, la détermination à partir des informations du tableau de carte de programme, si un programme est crypté ou non crypté.

8. Procédé selon la revendication 1, dans lequel la détection de la présence de la modification dans le statut de cryptage comprend l'utilisation d'une sortie de décodeur audio/vidéo pour déterminer si un canal est crypté ou non crypté.

9. Procédé selon la revendication 1, dans lequel la détection de la présence de la modification dans le statut de cryptage comprend l'utilisation d'un en-tête de PES pour déterminer si le signal audio ou vidéo est crypté.

10. Procédé selon la revendication 1, comprenant la réception, par le biais d'une interface d'utilisateur, de données représentant la commande d'informations correspondant à une vidéo identifiée par la prévisualisation de contenu en réponse à la détection d'un statut non crypté à un statut décrypté.

11. Circuit de traitement vidéo comprenant : une logique opérationnelle pour mettre en oeuvre le procédé de l'une quelconque des revendications 1 à 10.
